# EUROPEAN PATENT APPLICATION

(11) **EP 2 177 335 A1**
(43) Date of publication of application: **21.04.2010**
(21) Application number: 08381033.3
(22) Date of filing: 17.10.2008
(51) Int. Cl.: B29C 44/34, C08J 5/08

(54) **Procedure for obtaining a foamed laminar product**

(71) Applicant: Grupo Antolin-Ingenieria S.A., 09080 Burgos (ES); Trocellen GmbH, 53840 Troisdorf (DE)
(72) Inventor: Sanchez Lite, Alberto, 47007 Valladolid (ES); Gonzalez Rodriguez, Ignacio, 09006 Burgos (ES); Amor Chico, Francisco Javier, 19162 Pioz (ES); Ageda, Daniel, 1180 Uccle (BE); Cuesta Pajarejo, Francisco Javier, 28045 Madrid (ES)
(74) Representative: Capitan Garcia, Maria Nuria

(57) **Abstract**

This invention consists of a procedure for manufacturing a foamed laminar product in which the foam is obtained from thermoplastic material and additives (1.3). In order to improve the rigidity of the foamed laminar product, reinforcement fibre (1.2) is added to the mixture formed by thermoplastic material and additives (1.3), so that the reinforcement fibre (1.2) forms an integral part of the foamed laminate (5).

## Description

### OBJECT OF THE INVENTION

This invention refers to a procedure for manufacturing a foamed laminar product in which the foam is obtained from thermoplastic material and additives.

The invention refers particularly to a procedure for obtaining a foamed laminar product with improved rigidity properties.

With this objective, the invention describes a procedure for obtaining a foamed laminar product based on the mixture formed by the thermoplastic material, additives and reinforcement fibre, where the reinforcement fibre is an integral part of the foamed laminar product.

### BACKGROUND TO THE INVENTION

Foams are materials comprising small cells spread throughout the material mass and they have a lower density than that of the substance which acts as a structure. Foams can be obtained from thermoplastic, thermostable or elastomer materials.

In particular, in the group which includes thermoplastic foams, these may or may not be reticulated.

Non- reticulated thermoplastic foams are obtained from thermoplastic material and an inert gas such CO2 injected in a supercritical fluid state.

In the case of reticulated thermoplastic foams, these are obtained on the basis of mixing at least thermoplastic material with a foaming agent.

Reticulation of thermoplastic foams may be carried out by means of either a chemical or a physical process. In both cases the polymeric chains which form the polymer are broken down and subsequently re-ordered to form a three dimensional network. The network formed prevents gases provided by the foaming agent from freely escaping.

In the case of a chemical process, a chemical reaction is produced, involving a reticulating agent. When this reticulating agent reacts, a three dimensional network is produced, formed by the union of various polymeric chains which make up the polymer.

In the physical process, the reticulation is carried out by, for example, radiation or electronic bombardment. This process consists of submitting the polymer to a process in which source of radiation provides a an electron to be submitted in turn to a difference of potential.

The electron beam affects the polymer by penetrating its interior causing the polymeric chains which make up the polymer to be broken down. These polymeric chains are subsequently re-ordered to form a three dimensional network.

A process is known for manufacturing thermoplastic foams, in which the foaming agent, in addition to other additives mixes with a polyolefin in order to obtain an extruded laminate which later, following the application of heat to that extruded laminate, permits a foamed laminate to be obtained.

Depending on the application for which the foamed laminar product is designed, it is necessary for the laminate to have a specific rigidity.

In order to improve the rigidity of thermoplastic foams, the known solutions consist of creating a laminar structure in the form of a sandwich, by arranging reinforcement fibre on one or two main surfaces of the foamed laminate. An example which illustrates this configuration is the patent document JP8026148.

The fact of having to add reinforcement elements to the foamed laminate when the foamed laminate process has been completed, presupposes an increased manufacturing time and consequently raises the procedure price.

The present invention consists of a procedure for obtaining a foamed laminar product with improved rigidity properties, based on the incorporation of the reinforcement fibre as an integral part of the foamed laminar product.

### DESCRIPTION OF THE INVENTION

This invention consists of a procedure for obtaining a foamed laminar product based on mixing a thermoplastic material with additives and reinforcement fibre so that all the aforementioned items form part of the foamed laminar product.

A first aspect of the invention refers to a procedure for obtaining a foamed laminar product which includes the following stages:
a.Dosing of at least the following components:
   - Polyolefin
   - Reinforcement fibre
   - Additives
   Where at least one part of the polyolefin is premixed with the additives, forming a concentrate, and where the additives are formed by at least one foaming agent.
b.Heating and homogenisation of the components (1) used in stage a) for obtaining a homogenous mixture of components,
   c.obtaining a laminate formed from the homogenous mixture of the components obtained in stage b),
   d.Heating, reticulating and foaming of the laminate obtained in stage c),
   e.Cutting of the foamed laminate obtained in stage d)

The incorporation of the reinforcement fibre in the laminate product provides that product with improved rigidity properties, so that it is not necessary to carry out any subsequent lamination operation or addition of reinforcement fibre. In this way the manufacturing process is simplified, and as a result of this the cycle times of the manufacturing process are reduced, which lowers the cost of the procedure for obtaining a laminate product.

Furthermore, the fact that the reinforcement fibre is an integral part of the laminate product, produces an increase in the stability of the laminate during the foaming process as the reinforcement fibres may act as a physical bridge between polymeric chains.

Additionally, and in the specific case where fibreglass is used as a reinforcement fibre, the arrangement of the fibreglass between the polymeric chains contributes to increasing the fire-proof properties of the laminar product which permits the amount of additives used for this purpose to be reduced.

### DESCRIPTION OF THE DRAWINGS

The present descriptive report is complemented by a set of plans illustrating a preferred embodiment of the invention, but which is in no way restrictive.
Figure 1 shows a flow chart of the procedure for obtaining a foamed laminar product.
Figure 2 shows in diagram form, the installation in which the procedure for obtaining a foamed laminar product is carried out.
Figure 3 shows in diagram form a first example of the surface heating means for the foam laminate used to laminate it with further laminates.
Figure 4 shows in diagram form a second example of the surface heating means for the foam laminate used to laminate it with further laminates.
Figure 5 shows in diagram form a cutting process for the foamed laminar product for obtaining various laminates.
Figure 6 shows in diagram form the foam laminate obtained.
Figure 7 represents in diagram form the layers which make up a first example of a sandwich obtainable on the basis of the foamed laminate.
Figure 8 represents in diagram form, the layers which make up a second example of a sandwich obtainable on the basis of the foamed laminate.

### PREFERRED EMBODIMENT OF THE INVENTION

In the light of the foregoing, the present invention refers to a procedure for obtaining a foamed laminar product based on a homogenous mixture of at least one polyolefin and additives to which reinforcement fibre is added, so that all these components form an integral part of the foamed laminar product.

Prior to commencing a description of the stages which comprise the process for obtaining the foamed laminar product (6), the components (1) which make up the laminar product are described: polyolefin, additives and reinforcement fibre.

Polyolefin (1.1) is the main component of the laminar product in that it constitutes the basis of the mixture of components (1).

This polyolefin (1.1) may be for example, polyethylene or polypropylene or a mixture of both these polymers.

The second component which forms the laminar product and is mainly responsible for the rigid characteristics of the laminar product, is reinforcement fibre (1.2).

The reinforcement fibre (1.2)is used as a load of the component (1) mixture in order to improve the rigidity of the foamed laminar product (6) as well as increasing the stability thereof during the foaming process. This reinforcement fibre (1.2) may be presented in cut form.

The reinforcement fibre (1.2) is preferably fibreglass. Fibreglass, in addition to improving the rigidity of the foamed laminar product (6), contributes to improving the fire proof properties of the foamed laminar product (6) obtained, so that the amount of fire proof additives used is reduced with corresponding financial savings.

Natural fibres, such as hemp, jute or sisal, for example, may be used.

Finally, the third component which makes up the laminar product are additives (1.3), in particular, at least one chemical foaming agent which is responsible for foaming the polyolefin.

These agents consist of reactive additives which are able to liberate a gas as the result of a chemical reaction. Generally this gas is nitrogen or carbon dioxide, and it is responsible for forming the little cells which make up the foam structure.

The foaming agent used has a decomposition temperature above that of the softening point of the homogenous mixture (2.6) of components (1), resulting from heating and homogenisation of the components (1).

Preferably, the foaming agent used will be selected from among: azodicarbonide, polybenzene sulfonahydrazine, 4,4' difenylsulfonilazide, p,p' oxybis, (benzenesulfonylhydrazide) or dnitrosopentametylente tramine.

The percentage of foaming agent used in the mixture formed by the compound (1.1) is 0.5 -30% , and this ensures the production of foam, since with a percentage below the lower limit indicated, foam would not be produced, and with a percentage above the upper limit the foam would lose properties by liberating too much gas which could not be retained by the reticulate polymer.

In addition to the foaming agent other additives such as colourants may be used which provide the colour of the laminar product obtained; fire proofing agents designed to reduce the plastic's flammability and or reticulating agents.

The reticulating agent forms part of the additives (1.3), in the event that the reticulation of the polyolefin is carried out by means of a chemical reaction. When the reticulation is carried out by a physical process, this reticulating agent will not form part of the mixture of components (1).

The reticulating agent is formed by an organic peroxide the decomposition temperature of which is lower than that of the foaming agent, or whose decomposition speed is greater than that of the foaming agent.

Preferably the organic peroxides used are selected from among tertbutylperbenzoate, peroxide of benzoil, 2,4 dichlorobenzoilperoxide, acetylperoxide, lauryl peroxide, metyletylcetone peroxide or dicumyl peroxide.

The percentage of reticulating agent used is 0.1 -10% and between these limits reticulated foam is ensured so that an over-reticulated polyolefin (1.1) is not produced which would runs the risk of breaking during foaming.

The components (1) which make up the mixture may be presented in various forms at the start of the process based on how said components (1) are pre-mixed.

In order to facilitate incorporation of additives (1.3) in the polyolefin (1.1), a concentrate is used in which a high concentration of additives (1.3) is dispersed in polyolefin (1.1).

This concentrate is used to facilitate the subsequent incorporation of additives (1.3) in the final polymer due to the fact that, if direct mixing of the polyolefin (1.1) with the additives (1.3) is carried out as isolated components, this mixture of both components is less homogenous. However, if this mixture is made in the concentrate obtained on the basis of a previous mix of a high concentration of additives (1.3) with polyolefin (1.1) and polyolefin (1.1) the final result is a homogenous polymer formed on the basis of polyolefin (1.1) and additives (1.3).

As has been described above, the additives used (1.3) comprise at least one chemical foaming agent with the possibility of at least one chemical reticulating agent, colourants and/or fire proofing agents among others.

In addition this concentrate, formed from a high concentration of additives may contain, in a pre-mixed form reinforced fibre (1.2).

Furthermore, this reinforcement fibre (1.2) may be presented pre-mixed with polyolefin (1.1) on one hand, and on the other it may be provided with concentrate formed solely by additives (1.3) and polyolefin (1.1).

Another possibility may be that the reinforcement fibre (1.2) is presented in cut form without premixing with the polyolefin (1.1).

Below in diagram form and as a summary, some of the combinations of the components (1) on which the start of the process for obtaining a foamed laminar product (6) is based are as follows:
Combination 1:
   i) Concentrate formed from (1.3) and a polyolefin base (1.1).
   ii) Concentrate formed from reinforcement fibre (1.2) and a polyolefin base (1.1).
   iii) Polyolefin (1.1)
Combination 2:
   i) Concentrate formed from additives (1.3), reinforcement fibre (1.2) and a polyolefin base (1.1).
   ii) Polyolefin (1.1)
Combination 3:
   i) Concentrate formed from (1.3) and a polyolefin base (1.1).
   ii) Polyolefin (1.1)
   iii) Reinforcement fibre (1.2)

Having described the components (1) which make up part of the mixture of components (1) which will give rise to the foamed laminar product (6) and some of the possible combinations of pre-mix of said components, the stages which make up the process of obtaining the foamed laminar product is described.

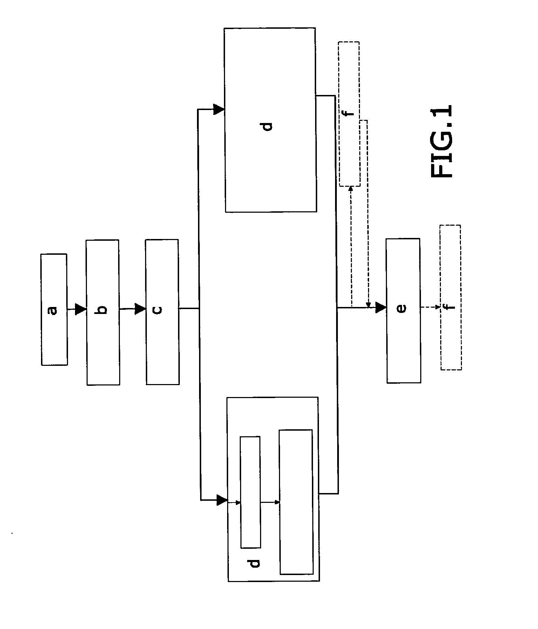

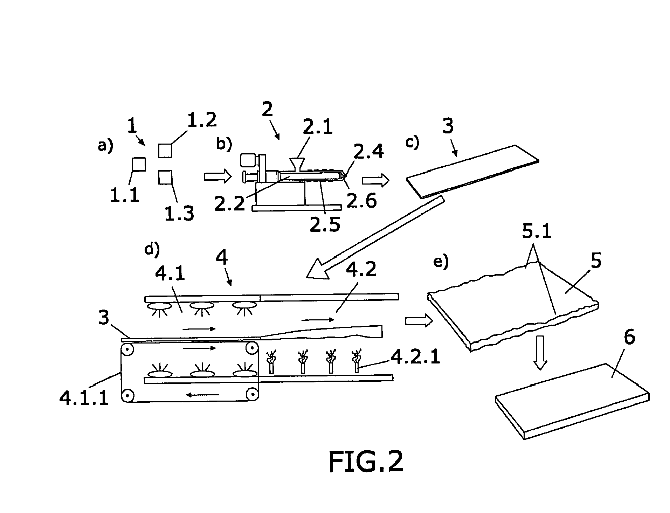

The process begins with the stage a) of dosing of the components (1) as shown in the flow chart in figure 1 and in the installation diagram in figure 2.

In this stage the requisite amounts of the components (1) described previously are taken to obtain the mixture of components (1).

The components (1) may be dosed, for example, on the basis of the pre-mixes described.

When the components (1) which will make up the mixture of components (1) have been dosed, the next stage will take place, namely stage b) which consists of heating and homogenising the components (1).

In order to carry out this second stage of the process in which a laminate (3) is obtained on the basis of heating and homogenisation of components (1), heating and homogenisation means are used to carry out these two operations. For this purpose the components (1) are added to the heating and homogenisation means. This operation may be carried out by adding all the components at the same time, or by adding them in stages, depending on the combination used.

By means of heating of the components (1), the polyolefin (1.1) is softened, which causes a homogenisation of the components (1) in order to ultimately obtain a homogenous mix (2.6) of the components. In this stage, the temperature of the homogenous mix (2.6) of the components (1) is preferably between 90° and 150° C. Within this range of temperatures, softening of the polyolefin (1.1) occurs without its degrading.

Having obtained the homogenous mix (2.6) of the components (1) stage c) is carried out in which a thermoplastic laminate (3) is obtained based on the homogenous mixture (2.6) of the components (1) obtained in stage b). This operation is carried out through means which provide the homogenous mixture (2.6) of the components (1) with a laminar (3) form by applying pressure.

Stages b) and c) described above may be carried out, for example, in a polymer extruder (2) which is described in detail below.

The components (1) may be added to the extruder (2) through a hopper (2.1) so that the operation is carried out in a single stage or they may be added to different zones of the extruder (2) through small hoppers which are not represented and which may be located along the main duct (2.2) of the extruder (2). In this way, first at least one of the components (1) enters, either in an isolated manner, or as part of a pre-mix and it melts in the main duct (2.2), and subsequently another of the materials (1) is added and so on until all the components (1) have been added.

At the end of the main duct (2.2) and prior to reaching the nozzle (2.4) of the extruder (2), a homogenous mixture (2.6) of the components (1) is obtained, due to the mechanical action in combination with the raised temperature of the materials (1) by means of both the heating of the barrel (2.5) and friction of the materials (2.5). At this point stage b) of the process is complete.

The nozzle (2.4) is situated at the end of the extruder (2) and is the element through which the homogenous mixture (2.6) of components (1) flows, in order to exit the extruder (2) and as a result of this nozzle (2.4) the homogenous mixture (2.6) acquires the desired profile in this case a laminar profile. In this way a laminate (3) is obtained formed by the homogenous mixture (2.6) of the components (1), completing stage c) of the process.

There may be various types of polymer extruder (2) depending on the number of ducts (2.2) situated in the barrel (2.5). The most frequently used is the mono-duct with a single duct in the barrel (2.5) and a double duct with two ducts in the barrel.

For example, in the event that the reinforcement fibre (1.2) is presented without mixing it with polyolefin (1.1), it would be appropriate to use a double duct extruder due to the fact that this type of extruder is more intense. In the event that the reinforcement fibre (1.2) is already mixed with polyolefin (1.1) it would be sufficient to use a single duct extruder.

The laminate (3) obtained has a thickness of 1 to 10 mm, a width of 350 to 1000 mm , depending on one hand on the restrictions of the means used in stage c) in order to give the laminate (3) form, and on the other hand the application for which the foamed laminar product (6) is to be used, and a length which will depend on the corresponding application and may be stored in formats or in rolls, in the event that the process is not carried out in a continuous manner, or either the laminate (3) continues towards the subsequent stage of the procedure without this stopping.

Having obtained the laminate (3), the next stage d) takes place, which consists of heating, reticulating and foaming of the laminate (3) obtained in stage c).

In this stage reticulating of the laminate (3) occurs, that is, a three dimensional network is formed by the connection of different polymeric chains which make up the polyolefin (1.1). This network will prevent gases provided by the foaming agent from freely escaping.

In addition, in stage d) the laminate (3) is heated in order to cause foaming of the laminate (3). The heating temperature of the laminate is preferably between 170 -320 °C, so that on one hand foaming of the laminate (3) is ensured and on the other the polyolefin (1.1) does not degrade. Said heating of the laminate (3) causes the foaming agent which is part of the laminate (3) decomposes, liberating a gas and thus causing the laminate (3) to foam.

It is necessary for foaming of the laminate (3) to be carried out in such a way that it freely expands (three dimensionally), that is, when foaming of the laminate (3) occurs there are no physical elements in contact with it which could hinder its free three dimensional expansion.

The previously described stages of heating, reticulating and foaming do not necessarily need to be made in this order. This will depend on the type of reticulation of the laminate (3) which is carried out in the process.

For example, if the reticulation is carried out through a physical reticulation process, it shall be done prior to the heating and foaming stages of the laminate (3) as may be seen in stage d) represented in the left part of the flow chart in figure 1, firstly the reticulation process is carried out by means of a physical process and when this stage has been completed, the heating the foaming stages take place.

This physical reticulation process may be carried out using radiation or electronic bombardment. This physical reticulation process consists of subjecting the laminate (3) to bombardment with an electron beam generated by a radiation source by subjecting it in turn to a difference of potential.

Another example would be a chemical process in which the reticulation is carried out through the action of chemical reactive agents, so that the reticulation is carried out once the heating stage has begun and will end prior to completion of the foaming stage, as shown in the right part of the flow chart in figure 1, where the three stages are related. In this case the application of heat during the heating stage will cause the reticulating agent to decompose in addition to decomposition of the foaming agent.

In the event that reticulation of the polyolefin takes place through a physical process, once this reticulation has been completed, the heating and foaming stages may be carried out in different types of installations such as, for example, a vertical or a horizontal furnace.

In the case of the vertical furnace for the physical reticulation, the laminate (3) enters through the upper part of the furnace arranged vertically and passes suspended along the furnace in such a way that it is not in contact with the walls thereof at any time, in order to assist the three dimensional foaming of the laminate in a free way, obtaining a foamed laminate (5) at the end of the furnace.

In the case of the horizontal furnace for the process of physical reticulation, the laminate (3) may enter the furnace through a conveyor belt and when the heating commences, in order to cause the decomposition of the foaming agent so that the foaming will begin, the laminate (3) will be supported by an air mattress which permits free expansion of the laminate so that at the end of the furnace the foamed laminate is obtained (5).

In the event that the reticulation of the polyolefin is carried out by means of a chemical process, in order to carry out the stages of heating, reticulation and foaming, a horizontal furnace will be used and which is explained in detail below.

The furnace (4) for the chemical reticulation process is divided into two parts, a first heating part (4.1) and a second foaming part (4.2) so that the unfoamed laminate (3) enters the first part (4.1) of the furnace and advances towards the second part (4.2) thereof until at the end of the second part (4.2) a foamed laminate (5) is obtained in a continuous manner.

The first part (4.1) of the furnace (4) the laminate (3) enters on a mobile support such as for example, by means of a conveyor belt (4.1.1.). Here the laminate (3) is heated to a temperature of 170 to 320° C so that on one hand foaming is guaranteed, and on the other the material is prevented from being degraded.

At this point the laminate (3) becomes less consistent due to the fact that the elevated temperature causes the polyolefin to soften (1.1), which is the main component of the laminate, therefore, it is necessary to transport the laminate (3) through the conveyor belt (4.1.1) mentioned above.

When the decomposition temperature of the reticulating agent is reached, radicals are generated which will form new links in the polyolefin (1.1) (for example with polyethylene), causing an increase in the rigidity of the laminate (3).

In addition, the heating of the laminate (3) causes the foaming agent to begin to decompose. At this point most of the reticulating agent has already decomposed and has reacted to form more links in the polyolefin (1.1) thus increasing the rigidity of the laminate (3). At this point the laminate (3) has sufficient rigidity to support its own weight without any need for the conveyor belt (4.1.1).

For transport of the laminate (3) in this second part (4.2) of the furnace (4), and in order to encourage the free (three dimensional expansion of the laminate (3) in the phase in which strong decomposition of the foaming agent occurs, a hot air mattress (4.2.1) is used as a means of transport and support for the laminate (3) during the foaming process. In this way, at the end of the second part (4.2) of the furnace (4), a foamed laminate is obtained (5) with a density between 3 and 20 mm and a width of between 500 and 2500 mm, with its length depending on the application for which the laminar product is destined (6).

The foamed laminate (5) obtained in stage d), is arranged in irregular lateral zones (5.1) as it is complicated to control the process accurately in order to ensure that the three dimensional foaming is uniform, specially in the lateral zones of the foamed laminate (5).
Therefore, in stage e) the foamed laminate (5) is cut, in particular in irregular lateral zones (5.1) of the foamed laminate (5) normally situated at the lateral edges of the foamed laminate (5). Therefore, following cutting of these extra parts, a foamed laminar product is obtained (6).

Having eliminated the irregular zones, the foamed laminar product (6) may suffer a second cut in accordance with the dimensions required for the application for which they are destined, it may also be stored in rolls to be used at a later date.

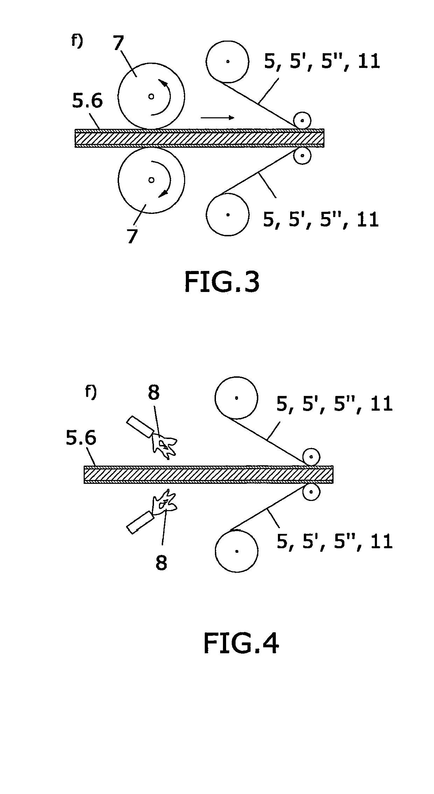

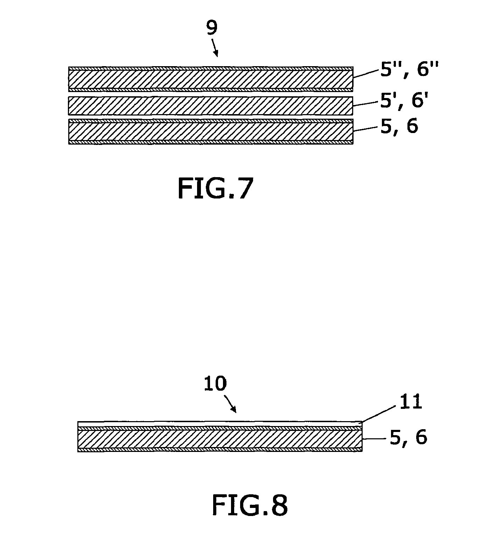

Additionally, when the foamed laminate (5) has been obtained (or the foamed laminar product (6) is the cutting stage e) has been carried out) a further stage of lamination may be carried out with at least one laminate ((5, 5', 5'', 11) as may be seen in figures 2 and 3 , in order to form a sandwich-shaped structure (such as those shown below in figures 7 and 8).

Lamination of the foamed laminate (5) may be carried out once the foamed laminate (5) emerges from the furnace, or after the cutting stage e) of the foamed laminate (5) has been carried out. Additionally, this lamination may be made continuously, or following storage of the foamed laminate (5).

The lamination of the foamed laminate (5) is achieved by superficial heating of the foamed laminate (5) which produces superficial softening of the thermoplastic material which makes up the laminate (5). In order to ensure that the lamination is adequately carried out, the percentage of the thermoplastic material contained in the foamed laminate (5) is between 60 and 99 %.

This softened thermoplastic material serves as a connection element for lamination of other layers on the foamed laminate (5, 5', 5'', 11).

In the event that lamination stage f) is carried out having made the cuts to the foamed laminate (5), this lamination is carried out on the foamed laminar product (6). Therefore, when the lamination process is described in respect of the foam laminate (5), this same process is also applicable to said foamed laminar product (6).

In order to carry out the lamination, superficial heating means may be used for example, for the foamed laminate (5) (or the foamed laminar product (6) which consist of hot rollers (7) such as those indicated in figure 3.

When the lamination has been carried out on the foamed laminate (5) of one or more laminates, it is possible to proceed to elimination of the irregular zones (5.1) of the laminate.

A second example for superficial heating of the foamed laminate (5) or the foamed laminar product (6) is by means of flaming with a torch (8) which is applied directly to the foamed laminate (5) (or the foamed laminar product (6)) as shown in figure 4. The effect is the same as in the previous case, superficial softening of the thermoplastic material of the foamed laminate (5) (or the foamed laminar product (6) ) occurs in order to permit other laminates to be affixed thereto.

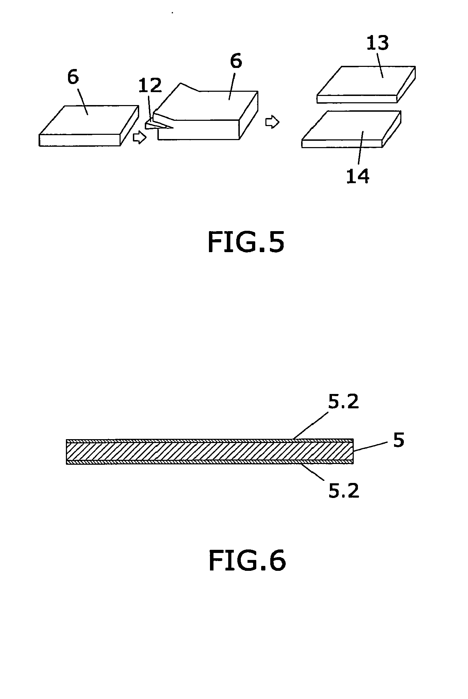

As indicated in the diagram in figure 5, it is possible to make at least one cut in the foamed laminar product (6) in order to obtain various laminates (13, 14).

By making one or several longitudinal cuts using cutting means (12) to the foamed laminar product (6) along planes parallel to the main surface thereof, we are able to obtain at least two laminates (13, 14) based on a single foamed laminar product (6).

Figure 6 shows a diagram of the resulting foamed laminar product (6), in particular, it is possible to note the distribution of the reinforcement fibre (1.2) once the laminate (3) has foamed.

Specifically, it is possible to view the zones (5.2) closest to the upper and lower surfaces of the foamed laminar product (6) in which the reinforcement fibre has accumulated. (1.2).

In these zones (5.2), the major part of the reinforcement fibre (1.2) has accumulated. This is due to the fact that at the end of stage b), involving the heating and homogenisation of the mixture of components (1), when the mixture (2.6) which is already homogenous, emerges from the nozzle (2.4) of the extruder (2) it is arranged predominantly on the upper and lower faces of the laminate (3) as a result of the end of the nozzle (2.4) where the accumulation of material is at its densest.

The percentage of reinforcement fibre (2.1) present in the foamed laminate (5) is between 1 and 40%. The length of this reinforcement fibre (1.3), in the event that the fibre used is fibreglass, is less than 25 mm.

Figure 7 represents in diagram form the layers which make up a first example of a sandwich (9) obtainable on the basis of the foamed laminate (5) of the invention.

The sandwich comprises three foamed laminates (5, 5' and 5'' or 6, 6', 6''). The second laminate (5', 6') is a foamed laminate obtained according to a process for obtaining the foamed laminate (5) (or the foamed laminar product (6)) except for use of the reinforcement fibre (1.3). This second laminate (5', 6') is laminated on the foamed laminate (5) for example, according to the lamination methods described above (figures 3 and 4).

The third laminate (5'', 6") is laminated on the second laminate (5', 6'). This third laminate (5'', 6'') is obtained according to the process for obtaining the foamed laminate (5) (or that of the foamed laminar product (6)).

As indicated through references 5 or 6, the lamination may be made before or after completion of stage e) of cutting, in order to eliminate irregular zones (5.1) of the foamed laminate (5) or on the foamed laminar product (6).

A second example of a sandwich (10) obtained on the basis of the foamed laminate (5) or the foamed laminar product (6)), as shown in diagram form in figure 8, is formed by the foamed laminate (5) (or by the foamed laminar product (6)) and a second decorative coating of laminate (11) which provides an appropriate finish to the foamed laminate (5).

In addition, lamination of other layers may be made depending on the application in question.

As in the previous case, this sandwich could be made once the irregular zones (5.1) have been eliminated from the foamed laminate (5), that is, on the foamed laminar product (6).

Furthermore, and in the specific case in which during stages b) and c) a polymer extruder is used, it is possible to obtain a co-roller (not shown) formed by various extruded laminates (3) by the extruder (2) in a process of co-extrusion using for example a multi-layer extrusion nozzle.

This co-roller may consist of for example, three laminates, the laminates of the external faces of the co roller formed by the mixture of materials (1) from stage a) of the process and in the central zone of the co-roller a laminate formed by the mixture of the materials from stage a) with the exception of the reinforcement fibre (1.2).

The essential nature of this invention is not altered by any variations in materials, form, size and arrangement of its component elements, described in a non-restrictive manner, with this being sufficient to proceed to its reproduction by an expert.

## Claims

1. Procedure for obtaining a foamed laminar product which includes the following stages:
a.Dosing of at least the following components (1) :
- Polyolefin (1.1)
- Reinforcement fibre (1.2)
- Additives (1.3)
Where at least one part of the polyolefin (1.1) is premixed with the additives (1.3) forming a concentrate , and where the additives (1.3) are formed by at least one foaming agent.
b.Heating and homogenisation of the components (1) used in stage a) for obtaining a homogenous mixture (2.6) of the components (1),
c.obtaining a laminate (3) formed from the homogenous mixture (2.6) of the components (1) obtained in stage b),
d.Heating, reticulating and foaming of the laminate (3) obtained in stage c),
e.Cutting of the foamed laminate (5) obtained in stage d)

2. Procedure for obtaining a foamed laminar product according to claim 1 **characterised in that** the concentrate formed by polyolefin (1.1) and additives (1.3) is additionally provided with reinforcement fibre (1.2).

3. Procedure for obtaining a foamed laminar product according to claim 1 **characterised in that** at least one part of the polyolefin (1.1) is pre-mixed with reinforcement fibre (1.2).

4. Procedure for obtaining a foamed laminar product according to claim 1 **characterised in that** the reinforcement fibre (1.2) used in stage a) is not pre-mixed.

5. Procedure for obtaining a foamed laminar product according to claim 1 **characterised in that** the reinforcement fibre (1.2) used in stage a) is cut fibre.

6. Procedure for obtaining a foamed laminar product according to claim 1 **characterised in that** the reinforcement fibre (1.3) used in stage a) is fibreglass.

7. Procedure for obtaining a foamed laminar product according to claim 1 **characterised in that** the polyolefin (1.1) used in stage a) of the process is polyethylene, polypropylene or a combination of polyethylene and polypropylene.

8. Procedure for obtaining a foamed laminar product according to claim 1 **characterised in that** at least one foaming agent has a decomposition temperature above that corresponding to the softening point of the homogeneous mixture (2.6) obtained in stage b).

9. Procedure for obtaining a foamed laminar product according to claim 8 **characterised in that** at least one foaming agent is selected from among azodicarbonide, polybenzenosulfonahydrazine, 4,4' difenylsulfonilazide, p,p'oxibis, (benzenesulfonylhydrazide) or dinitrosopentametylentetramine.

10. Procedure for obtaining a foamed laminar product according to claim 1 **characterised in that** the percentage of at least one foaming agent used in the concentrate is between (0.5 -30%).

11. Procedure for obtaining a foamed laminar product according to claim 1 **characterised in that** in stage b) of the heating and homogenisation of the components (1)these are at a temperature of between 90 and 150°C.

12. Procedure for obtaining a foamed laminar product according to claim 1 **characterised in that** the laminate (3) obtained at the end of stage b) is made by means of an extrusion process.

13. Procedure for obtaining a foamed laminar product according to claims 2 or 3 **characterised in that** stage b) of heating and homogenisation of the materials is carried out in a plastic material extruder with a single duct.

14. Procedure for obtaining a foamed laminar product according to claim 4 **characterised in that** stage b) of heating and homogenisation of the materials is carried out in a plastic material extruder with a double duct.

15. Procedure for obtaining a foamed laminar product according to claim 1 **characterised in that** the laminate (3) obtained in stage c) has a thickness between 1 to 10 mm and a width from 350 to 1000 mm.

16. Procedure for obtaining a foamed laminar product according to claim 1, **characterised in that** stage d),reticulation of the laminate (3)is carried out prior to heating and foaming of said laminate (3).

17. Procedure for obtaining a foamed laminar product according to claim 16, **characterised in that** the reticulation is carried out by means of a physical process.

18. Procedure for obtaining a foamed laminar product according to claim 16, **characterised in that** the heating and foaming is carried out in a furnace with a horizontal or vertical configuration.

19. Procedure for obtaining a foamed laminar product according to claim 1, **characterised in that** stage d),reticulation of the laminate (3)is carried out during heating and foaming of said laminate (3).

20. Procedure for obtaining a foamed laminar product according to claim 19, **characterised in that** reticulation of the laminate (3)is carried out by means of a physical process.

21. Procedure for obtaining a foamed laminar product according to claim 19, **characterised in that** reticulation of the laminate (3) is carried out in furnace with a horizontal configuration.

22. Procedure for obtaining a foamed laminar product according to claim 20 **characterised in that** the reticulation carried out in a chemical process is caused by the action of a chemical reticulating agent which forms part of the additives (1.3).

23. Procedure for obtaining a foamed laminar product according to claim 22, **characterised in that** the reticulating agent is formed by an organic peroxide with a decomposition temperature lower than the decomposition of at least a foaming agent.

24. Procedure for obtaining a foamed laminar product according to claim 22 **characterised in that** the percentage of reticulating agent used in the concentrate is between (0.1 -10%).

25. Procedure for obtaining a foamed laminar product according to claim 1 **characterised in that** the foamed laminate (5) obtained at the end of stage d) has a thickness of between 3 to 20 mm, a density of between 25 and 250 kg/m³, a percentage of thermoplastic material ranking from 60 to 99 % and reinforcement fibre (1.3) percentage between 1 and 40% with the length of said reinforcement fibre being less than 25 mm.

26. Procedure for obtaining a foamed laminar product according to claim 1, **characterised in that** the cutting operation for the foamed laminate (5) of stage e) is carried out in order to eliminate irregular zones (5.1) situated at the sides of the foamed laminate (5) obtained in stage d).

27. Procedure for obtaining a foamed laminar product according to claim 1 **characterised in that** it carries out a lamination stage f) with at least a second laminate (5', 11) prior to stage e) or following stage e).

28. Procedure for obtaining a foamed laminar product according to claim 27, **characterised in that** the second laminate is a decorative coating laminate (11).

29. Procedure for obtaining a foamed laminar product according to claim 27, **characterised in that** the lamination of the foamed laminate (5) (or foamed laminar product (6)) occurs through superficial softening of the foamed laminate (5) (or the foamed laminar product (6) ) by means of heating, consisting of the application of hot rollers (7) or a flame (8).

30. Procedure for obtaining a foamed laminar product according to claim 1 **characterised in that** the end of the stage e) at least one cut is applied along the plane parallel to the main surface of the foamed laminar product (6) obtained in order to obtain at least two laminates (12, 13).
